# DEMANDE DE BREVET EUROPEEN

(11) **EP 3 185 123 A1**
(43) Date de publication de la demande: **28.06.2017**
(21) Numéro de dépôt: 16203136.3
(22) Date de dépôt: 09.12.2016
(51) Int. Cl.: G06F 9/50, G06F 1/32, H04W 52/02

(54) **PROCÉDÉ DE GESTION DE RESSOURCES SUR UN TERMINAL**

(30) Priorité: 21.12.2015 FR 1562984
(71) Demandeur: Orange, 75015 Paris (FR)
(72) Inventeur: GUENNEC, Hervé, 22300 Lannion (FR); MER, Nadia, 22730 Lannion (FR)

(57) **Abrégé**

Procédé de gestion de ressources lors de la capture d'au moins un flux de données sur un terminal, le terminal comprenant au moins un premier dispositif d'acquisition d'un flux de données et un second dispositif d'acquisition alternatif au premier dispositif d'acquisition, les premier et second dispositifs d'acquisition étant adaptés pour capturer un même type de données. Le procédé est remarquable en ce qu'il comprend des étapes d'obtention d'une indication selon laquelle une limite de ressources est atteinte, d'identification des dispositifs d'acquisition en cours d'utilisation, et de mise en oeuvre d'une mesure d'économie de ressources associée au premier dispositif d'acquisition, lorsque le premier dispositif est identifié en cours d'utilisation.

## Description

### Domaine technique

L'invention appartient au domaine des terminaux mobiles et en particulier au domaine de la gestion de ressources sur un terminal mobile.

### Art antérieur

Les technologies de communication connaissent une évolution très rapide ces dernières années. Les terminaux mobiles connectés en particulier, comme par exemple les téléphones intelligents dits smartphones, se sont démocratisés et occupent aujourd'hui une place centrale dans la vie de leurs utilisateurs. Les utilisateurs sont joignables à tout instant selon différentes modalités et partagent toutes sortes d'informations avec d'autres, où et quand ils le désirent.

Ces terminaux permettent par exemple d'établir des communications vocales, d'échanger des fichiers, des messages instantanés ou des courriels, ou encore d'établir des communications vidéo. Les smartphones comprennent souvent différents types de capteurs, tels que par exemple des capteurs de proximité ou de lumière, ou encore un module de localisation de type GPS. De nombreux terminaux intègrent également une double caméra, l'une étant positionnée sur la face avant du terminal afin de capturer le visage de l'utilisateur et l'autre étant située sur la face opposée pour capturer des images de l'environnement du terminal. De même, certains terminaux intègrent un microphone d'ambiance destiné à capturer le son de l'environnement et un second microphone destiné à capturer la voix de l'utilisateur lorsqu'il est en communication. En association avec ces dispositifs de capture, les terminaux comprennent également des composants d'encodage et de décodage audio et vidéo temps réels, ainsi que différents type d'interfaces réseau sans fil, comme par exemple des interfaces Wifi, Bluetooth ou 3G.

Une telle accumulation de fonctionnalités dans un dispositif compact et nomade pose un problème de gestion des ressources. Ainsi, une gestion d'énergie très rigoureuse est indispensable pour que les utilisateurs puissent disposer d'une autonomie satisfaisante.

Les communications audiovisuelles de type visioconférence sont particulièrement consommatrices de ressources. En effet, ce mode de communication nécessite la mise en oeuvre simultanée d'un encodeur et d'un décodeur vidéo, d'une caméra et d'un écran, d'un encodeur et d'un décodeur audio, d'un amplificateur, d'un haut-parleur et d'un microphone.

Différentes solutions ont été proposées pour optimiser la consommation d'énergie dans ces conditions. Par exemple, la demande de brevet internationale WO 2014138331 A2 décrit un procédé permettant d'adapter la qualité d'une vidéo décodée selon la charge résiduelle de la batterie d'un terminal. On connait également des procédés d'adaptation de la qualité d'une vidéo selon les ressources réseau disponibles.

Toutefois, ces techniques d'adaptation se basent uniquement sur les ressources disponibles et ne prennent pas en compte le contexte d'utilisation du terminal. Il peut ainsi arriver que la qualité d'un flux vidéo et/ou d'un flux audio soit diminuée à un moment qui n'est pas opportun pour l'utilisateur.

Il existe donc un besoin pour adapter la consommation de ressources lors d'une communication en fonction du contexte dans lequel est utilisé le terminal.

L'invention vient améliorer la situation.

### Résumé de l'invention

À cet effet, l'invention concerne un procédé de gestion de ressources lors de la capture d'au moins un flux de données sur un terminal, le terminal comprenant au moins un premier dispositif d'acquisition d'un flux de données et un second dispositif d'acquisition alternatif au premier dispositif d'acquisition, les premier et second dispositifs d'acquisition étant adaptés pour capturer un même type de données, le procédé étant tel qu'il comprend les étapes suivantes :
- Obtention d'une indication selon laquelle une limite de ressources est atteinte,
- Identification des dispositifs d'acquisition en cours d'utilisation,
- Mise en oeuvre d'une mesure d'économie de ressources associée au premier dispositif d'acquisition, lorsque le premier dispositif est identifié en cours d'utilisation.

L'identification d'un dispositif d'acquisition en cours d'utilisation permet de déterminer un contexte d'utilisation. Par exemple, il est possible de déterminer un contexte d'utilisation selon que le dispositif d'acquisition est une caméra située au dos du terminal ou une caméra située sur la face avant du terminal. De même, il est possible de déterminer un contexte d'utilisation selon que le dispositif d'acquisition est un microphone d'ambiance ou un microphone configuré pour capturer la voix de l'utilisateur.

Ainsi, lorsqu'une limite de ressources est atteinte, le procédé propose de mettre en oeuvre au moins une mesure d'économie de ressources adaptée au contexte d'utilisation déterminé à partir des dispositifs d'acquisition en cours d'utilisation.

Le procédé peut ainsi déterminer un contexte d'utilisation du terminal selon le dispositif de capture qui est en cours d'utilisation, afin de prendre des mesures d'économie d'énergie adaptées à ce contexte.

La mesure d'économie de ressources mise en oeuvre est associée au premier dispositif. Ainsi, elle n'affecte pas le flux issu du second dispositif.

Selon un mode particulier de réalisation, le procédé est tel que la mesure d'économie de ressources associée au premier dispositif d'acquisition est mise en oeuvre lorsque les premier et second dispositifs d'acquisition sont identifiés en cours d'utilisation.

Lorsque les premier et second dispositifs d'acquisition sont utilisés simultanément, par exemple dans le but de composer et transmettre un flux vidéo comprenant des images de l'environnement du terminal dans lesquelles sont incrustées des images de l'utilisateur, le procédé propose de mettre en oeuvre une mesure d'économie de ressources associée au premier dispositif d'acquisition. Ainsi, une mesure d'économie de ressource peut être mise en oeuvre pour l'image incrustée sans que l'image dans laquelle elle est incrustée soit affectée par une telle mesure.

Procédé selon l'une quelconque des revendications précédentes caractérisé en ce que le premier dispositif d'acquisition est un dispositif de capture audio destiné à capturer un son de l'environnement du terminal.

Procédé selon l'une quelconque des revendications précédentes caractérisé en ce que le premier dispositif d'acquisition est un dispositif de capture vidéo destiné à capturer des images de l'utilisateur du terminal.

Selon une réalisation particulière, le procédé est tel que la mesure d'économie de ressources comprend la suspension de la capture par le premier dispositif.

La capture à partir du premier dispositif est stoppée lorsque celui-ci est déterminé en cours de fonctionnement. Le fait que le premier dispositif de capture soit en cours de fonctionnement donne une indication sur un contexte probable d'utilisation du terminal par son utilisateur. Il est ainsi possible de stopper la capture pour libérer des ressources selon le contexte d'utilisation du terminal. Une telle disposition permet la réalisation d'économies en termes de consommation électrique et en bande passante réseau.

Selon un mode de réalisation particulier, le procédé est tel que les premier et second dispositifs d'acquisition sont localisés sur des faces différentes du terminal.

Le fait que les premier et second dispositifs d'acquisition soient localisés sur des faces différentes du terminal permet la détermination d'un contexte d'utilisation du terminal selon le dispositif en cours de fonctionnement. En particulier, il est possible de distinguer l'utilisation que fait l'utilisateur de son terminal selon qu'un dispositif d'acquisition est actif sur la face avant ou sur la face arrière du terminal. Lorsqu'un dispositif d'acquisition est actif sur la face arrière du terminal, on peut en déduire que les données capturées sont relatives à l'environnement de l'utilisateur. À l'inverse, lorsqu'un dispositif d'acquisition est actif sur la face avant du terminal, on peut déduire que les données capturées sont relatives à l'utilisateur lui-même.

Ainsi, un contexte d'utilisation peut être déterminé selon qu'un dispositif d'acquisition situé sur la face avant du terminal ou sur la face arrière du terminal est en cours d'utilisation.

Selon un mode particulier de réalisation, le procédé est tel que le flux de données est un flux vidéo.

Les premier et second dispositifs d'acquisition sont des capteurs vidéo, comme par exemple des caméras adaptées pour capturer un flux vidéo. Il est alors possible de déterminer le contexte d'utilisation du terminal selon la caméra en cours d'utilisation. Par exemple, si une caméra située au dos du terminal est active, le procédé peut déterminer que l'utilisateur capture une séquence vidéo représentative de l'environnement du terminal. À l'inverse, si une caméra située sur la face avant du terminal, par exemple sur la face du terminal comprenant un écran, le procédé peut déterminer que l'utilisateur capture une image de lui-même. De manière classique, lorsqu'une communication vidéo de type visioconférence est établie avec un correspondant, une première caméra située sur la face avant du terminal (caméra frontale) est activée par défaut, de manière à ce que les correspondants puissent se voir et se parler. Lorsqu'un utilisateur sélectionne de manière explicite une seconde caméra du terminal pour émettre un flux vidéo alternatif vers un correspondant, c'est généralement qu'il veut partager un objet de l'environnement qu'il considère plus important à montrer que son propre visage. Par exemple, un utilisateur peut sélectionner une seconde caméra dorsale à la place de la première caméra frontale de son terminal afin de transmettre vers un correspondant un flux vidéo représentatif d'un document qu'il veut partager. Dans un pareil cas, le procédé propose d'identifier les caméras en cours d'utilisation et de mettre en oeuvre une mesure d'économie de ressources uniquement si la première caméra frontale est en cours d'utilisation. Ainsi, le procédé permet de préserver le flux vidéo issu de la seconde caméra lorsqu'une limite de ressources est atteinte, et de mettre en oeuvre une mesure d'économie de ressources lorsqu'à l'inverse, c'est la première caméra qui est utilisée.

De cette façon, le procédé permet d'adapter la mise en oeuvre de mesures d'économie de ressources selon le contexte d'utilisation du terminal, le contexte d'utilisation étant déterminé par l'identification des caméras en cours d'utilisation sur le terminal.

Selon une réalisation particulière, le procédé est tel que la mesure d'économie de ressources comprend la répétition de la dernière image capturée par le premier dispositif.

Lorsqu'une limite de ressources est atteinte et que le dispositif d'acquisition identifié est la première caméra, par exemple une caméra frontale destinée à capturer des images de l'utilisateur au cours d'une visioconférence avec un correspondant, le procédé suspend la capture de nouvelles images par la première caméra et provoque la répétition de la dernière image capturée. Ainsi, les ressources utilisées par la caméra peuvent être libérées. D'autre part, le codage vidéo d'une image fixe étant beaucoup moins complexe que le codage d'une séquence d'images différentes, le procédé contribue en outre à réduire la consommation des ressources réseau lors de l'émission vers un correspondant du flux vidéo. Le procédé permet ainsi de réduire les ressources utilisées lorsque la première caméra est identifiée en cours d'utilisation tout en continuant à émettre une image de l'utilisateur vers le correspondant.

Selon un mode particulier de réalisation, le procédé est tel que la mesure d'économie de ressources comprend la réduction de la fréquence de capture des images par le premier dispositif.

En réduisant la fréquence de capture des images, le procédé permet de réduire la complexité du traitement à réaliser pour l'encodage du flux vidéo. Une telle mesure d'économie de ressources permet ainsi de libérer du temps de calcul, de ralentir la décharge de la batterie et de réduire le nombre de données envoyées sur le réseau pour transmettre le flux vers un correspondant.

Selon un mode de réalisation particulier, le procédé est tel que la mesure d'économie d'énergie comprend la réduction de la résolution spatiale des images capturées par le premier dispositif.

En réduisant la résolution spatiale des images capturées, le procédé permet de réduire la complexité du traitement à réaliser pour l'encodage du flux vidéo. Une telle mesure d'économie de ressources permet ainsi de libérer du temps de calcul, de ralentir la décharge de la batterie et de réduire le nombre de données envoyées sur le réseau pour transmettre le flux vers un correspondant.

Selon un mode particulier de réalisation, le procédé est tel que la mesure d'économie de ressources comprend l'envoi vers le correspondant de la dernière image capturée par le premier dispositif d'acquisition vidéo et l'arrêt de la capture à partir du premier dispositif.

De cette façon, le correspondant dispose de la dernière image capturée par le terminal et peut afficher cette image à la place du flux vidéo.

Selon une réalisation particulière, le procédé est tel que le flux de données est un flux audio.

Le flux de données est un flux audio capturé par un premier et/ou un second dispositif d'acquisition audio du terminal. De manière classique, certains terminaux comprennent au moins deux microphones. Un premier microphone est destiné à capturer un son d'ambiance, représentatif de l'environnement du terminal. Un second microphone est destiné à capturer la parole de l'utilisateur lorsqu'il est en communication. Ces microphones peuvent être répartis sur des faces différentes du terminal. Il est ainsi possible de déterminer un contexte d'utilisation du terminal selon le microphone utilisé pour la capture. L'identification du dispositif d'acquisition audio en cours d'utilisation permet au procédé de mettre en oeuvre une mesure d'économie de ressources adaptée au contexte d'utilisation du terminal. Par exemple, lorsque le premier dispositif d'acquisition audio est identifié en cours de fonctionnement, c'est-à-dire lorsque le microphone destiné à capturer l'ambiance sonore de l'environnement du terminal est activé, le procédé peut mettre en oeuvre une mesure d'économie de ressources. Par exemple, l'ambiance sonore étant généralement d'une importance moindre, le terminal peut dans ce cas stopper la capture audio, ou encore changer le format d'encodage du flux audio pour un format moins consommateur en temps de calcul ou moins consommateur en bande passante. A l'inverse, lorsque le second dispositif de d'acquisition audio, c'est-à-dire le microphone destiné à capturer la parole de l'utilisateur, est identifié en cours d'utilisation, le procédé propose de préserver le flux audio car la parole de l'utilisateur est généralement de haute importance lors d'une communication audiovisuelle.

Selon un autre aspect, l'invention concerne un dispositif de gestion de ressources lors de la capture d'au moins un flux de données sur un terminal, le dispositif comprenant au moins un premier dispositif d'acquisition d'un flux de données et un second dispositif d'acquisition alternatif au premier dispositif d'acquisition, les premier et second dispositifs d'acquisition étant adaptés pour capturer un même type de données, le dispositif étant caractérisé en ce qu'il comprend :
- Un module d'analyse adapté pour obtenir une indication selon laquelle une limite de ressource est atteinte,
- Un module d'identification des dispositifs d'acquisition en cours d'utilisation, et
- Un module de commande configuré pour mettre en oeuvre une mesure d'économie de ressources associée au premier dispositif d'acquisition, lorsque le premier dispositif est identifié en cours d'utilisation.

Selon une réalisation particulière, le dispositif est tel que les premier et second dispositifs d'acquisition sont localisés sur des faces différentes du dispositif.

L'invention se rapporte encore à un terminal comportant un dispositif de gestion tel que décrit ci-dessus.

Le dispositif et le terminal présentent des avantages analogues à ceux du procédé précédemment présenté.

Dans un mode particulier de réalisation, les différentes étapes du procédé selon l'invention sont déterminées par des instructions de programmes d'ordinateurs.

En conséquence, l'invention vise aussi un programme d'ordinateur comportant des instructions adaptées à la mise en oeuvre des étapes d'un procédé tel que décrit ci-dessus, lorsque le programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi support d'enregistrement lisible par un processeur sur lequel est enregistré un programme d'ordinateur comprenant des instructions pour l'exécution des étapes du procédé.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, une mémoire flash, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé de gestion.

### Liste des figures

D'autres caractéristiques et avantages apparaîtront à la lecture de modes de réalisation préférés décrits en référence aux figures parmi lesquelles :
- Les **figures 1a et 1b** illustrent différentes vues d'un terminal adapté pour mettre en oeuvre l'invention selon un mode de réalisation particulier,
- La **figure 2** illustre les principales étapes du procédé de gestion selon un mode de réalisation particulier de l'invention, et
- La **figure 3** illustre l'architecture d'un dispositif adapté pour mettre en oeuvre l'invention selon un mode particulier de réalisation.

### Description détaillée

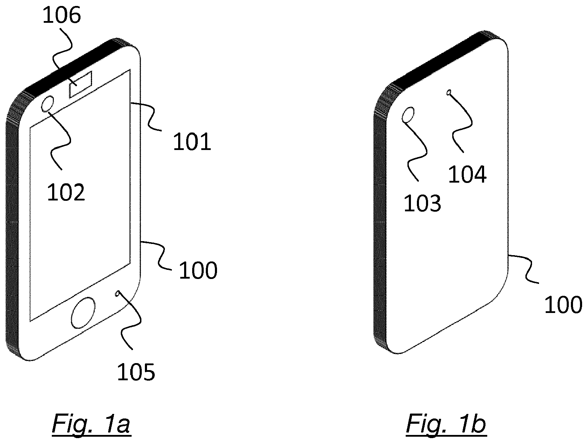

Les figures 1a et 1b illustrent différentes vues d'un terminal 100 adapté pour mettre en oeuvre de l'invention selon un mode de réalisation particulier. Le terminal 100 est un terminal mobile de type Smartphone équipé d'un écran 101 et de différents dispositifs d'acquisition, comme par exemple d'une première caméra frontale 102 destinée à capturer des images de l'utilisateur lorsqu'il est en communication audiovisuelle avec un correspondant. L'écran 101 permet de restituer l'image du correspondant. Une seconde caméra 103, localisée sur la face arrière du terminal, est destinée à capturer des images de l'environnement de l'utilisateur. Le terminal 100 comporte également un premier microphone 104 situé sur le dos du terminal. Ce microphone est destiné à capturer des sons de l'environnement du terminal. Le terminal 100 comporte enfin un second microphone 105 destiné à capturer la parole de l'utilisateur lorsqu'il est en communication et un haut-parleur 106 pouvant servir à restituer un signal sonore, et en particulier un signal de parole reçu depuis un terminal distant lors d'une communication. Les microphones 104,105 et les caméras 102,103 sont configurés pour capturer des flux de données audio et vidéo pouvant être encodés dans un format adapté pour être transmis vers un correspondant lors d'une communication audiovisuelle de type visioconférence.

Pour cela, le terminal 100 comprend une unité de traitement comportant une mémoire RAM et un processeur. Des instructions de programme d'ordinateur sont chargées dans la mémoire RAM à partir d'une mémoire persistante afin d'être exécutées par le processeur de l'unité de traitement. Ces instructions sont adaptées pour réaliser l'acquisition d'un flux de données à partir d'au moins un microphone et d'au moins une caméra, l'encodage de ces données selon un format adapté et la transmission des données encodées vers un terminal distant. Le programme d'ordinateur comprend également des instructions pour recevoir des données audio et vidéo depuis une interface de communication du terminal, une interface réseau Wifi par exemple, décoder ces données et les restituer par l'intermédiaire du haut-parleur 106 et de l'écran 101.

Le terminal 100 offre un premier mode de communication dans lequel le son et les images transmises vers un correspondant lors d'une communication sont capturés par le microphone 105 et la caméra 102. Un tel mode de fonctionnement permet à l'utilisateur de transmettre sa propre image et sa propre voix vers le correspondant lors d'une communication audiovisuelle. Un second mode de fonctionnement du terminal 100 met en oeuvre la caméra 103 et le microphone 104 pour réaliser la capture des flux émis vers le correspondant lors d'une communication. Ce dernier mode de fonctionnement permet avantageusement à un utilisateur du terminal de partager un objet de l'environnement avec un correspondant. Par exemple, selon ce mode de fonctionnement, un utilisateur peut présenter un document, un objet ou encore partager un signal sonore de son environnement. De manière classique, de tels terminaux présentent une interface graphique adaptée pour réaliser de manière volontaire une bascule entre le premier et le second mode de communication. Ainsi, un utilisateur du terminal 100 peut facilement communiquer en partageant soit son image, soit un objet de l'environnement, soir les deux. À titre d'alternative, le flux vidéo transmis vers le correspondant peut être composé à partir des images capturées par la caméra 103 dans lesquelles sont incrustées des images de l'utilisateur capturées par la caméra 102, ou inversement. De même, le flux audio transmis vers un correspondant peut résulter d'un mixage des flux audio capturés simultanément par les deux microphones.

Une communication audiovisuelle bidirectionnelle met ainsi en oeuvre de nombreux composants et peut s'avérer très consommatrice en ressources énergétiques et en ressources réseau.

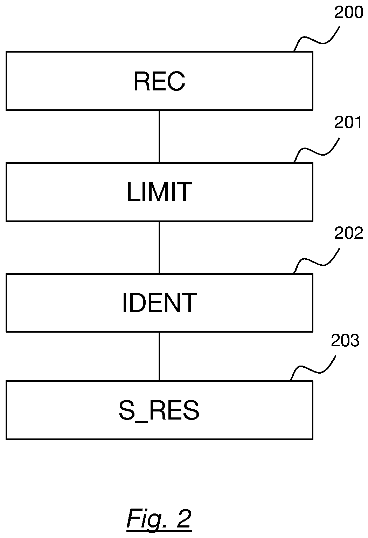

La **figure 2** illustre les principales étapes du procédé de gestion, selon un mode particulier de réalisation de l'invention.

Selon une première **étape 200**, une communication audiovisuelle est établie avec un correspondant. Un flux vidéo est alors capturé à partir de la première caméra 102, de la seconde caméra 103 ou encore à partir des caméras 102 et 103 simultanément de façon à composer une vidéo comportant à la fois une image de l'utilisateur et une image de l'environnement de l'utilisateur. De même, un flux audio est également capturé à partir du premier microphone 104, du second microphone 105 ou encore simultanément à partir des microphones 104 et 105, de façon à composer un flux audio résultant d'un mixage entre les flux audio capturés à partir des microphones 104 et 105. Bien entendu, différentes variantes sont possibles, les flux transmis pouvant être capturés à partir d'un ou plusieurs dispositifs d'acquisition quelconques du terminal.

À **l'étape 201**, une indication selon laquelle une limite de ressources est atteinte est obtenue. Une telle indication peut par exemple signaler le fait qu'un seuil prédéterminé de décharge de la batterie est atteint. L'indication peut être obtenue par l'intermédiaire d'un composant de gestion de l'alimentation du terminal lorsque la charge résiduelle de la batterie atteint par exemple 10%. Pour cela, le composant de gestion de l'alimentation transmet par exemple de manière régulière le niveau de charge de la batterie au système d'exploitation du terminal, en utilisant par exemple un bus de communication. Le système d'exploitation peut être configuré de façon à émettre une notification à destination d'autres composants lorsque la charge atteint un seuil critique prédéterminé. Ainsi, selon une réalisation particulière de l'invention, le système d'exploitation émet une notification indiquant qu'un seuil de charge résiduel de la batterie est atteint.

Selon un autre mode de réalisation particulier, l'indication selon laquelle une limite de ressources est atteinte concerne une limite en terme de capacité de traitement. Par exemple, le système d'exploitation du terminal peut consulter régulièrement une table des processus en cours d'exécution sur le terminal afin évaluer le temps de calcul disponible. Lorsque le temps de calcul disponible atteint une limite prédéterminée, par exemple lorsque l'unité de traitement principale du terminal atteint un taux d'utilisation de 95%, le système d'exploitation peut émettre une notification indiquant qu'une limite de ressource de calcul est atteinte.

Selon une réalisation particulière, l'indication selon laquelle une limite de ressources est atteinte concerne une limite en terme de mémoire disponible. Par exemple, le système d'exploitation du terminal peut consulter régulièrement une table d'occupation de la mémoire RAM afin évaluer la quantité de mémoire disponible. Lorsque la quantité de mémoire disponible atteint un seuil prédéterminée, par exemple lorsque la mémoire centrale est occupée à 90%, le système d'exploitation peut émettre une notification indiquant qu'une limite de mémoire est atteinte.

Selon un mode particulier de réalisation, la limite de ressources concerne une limite relative aux capacités de transmission des données sur le réseau. Par exemple, une indication selon laquelle une limite de bande passante est atteinte peut être obtenue. Pour cela, le procédé peut consulter des rapports de transmission suite à l'envoi des données audiovisuelles vers un terminal distant. De tels rapports sont par exemple fournis par un protocole de communication tel que RTCP (Real-Time Transport Control Protocol). L'analyse de ces rapports fournit ainsi des informations sur d'éventuelles congestions dans le réseau de transport et permettent au procédé selon l'invention d'obtenir une indication selon laquelle une limite de bande passante est atteinte.

Lors d'une **étape 202**, les dispositifs d'acquisition en cours d'utilisation sont identifiés. Par exemple, le terminal détermine si la caméra 102 est active, ou bien si la caméra 103 est active, ou bien encore si les deux caméras sont actives simultanément. De même, lorsque le terminal comporte une pluralité de dispositifs de capture audio, les dispositifs en cours d'utilisation sont identifiés. Pour cela, le terminal peut par exemple utiliser des interfaces de programmation de son système d'exploitation pour lister dans un premier temps les dispositifs de capture disponibles sur le terminal puis, pour chacun des dispositifs de cette liste, interroger le système d'exploitation afin de déterminer s'ils sont actifs ou non.

Selon un mode particulier de réalisation, une information de priorité est associée aux différents dispositifs d'acquisition. Cette information permet de classer les dispositifs d'acquisition selon leur importance dans la communication. Par exemple, la parole d'un utilisateur étant généralement essentielle dans une communication, la priorité du dispositif d'acquisition audio 105 de la figure 1 peut être supérieure à celle du dispositif de capture du son ambiant 103. Ainsi, une priorité de premier rang peut être affectée au dispositif 105 et une priorité de rang inférieur peut être affectée au dispositif d'acquisition 103. Le classement des dispositifs d'acquisition selon leur priorité peut être mémorisé sous la forme d'un fichier de configuration stocké dans une mémoire persistante du terminal, ou dans une base de données du terminal, et par exemple renseigné au préalable par l'utilisateur. Selon une réalisation particulière, la configuration est mémorisée sur un serveur accessible via un réseau de communication.

Selon une réalisation particulière de l'invention, la priorité d'un dispositif d'acquisition est déterminée par l'emplacement du dispositif sur le terminal. En effet, la face sur laquelle est positionné un dispositif d'acquisition permet de déterminer un contexte d'utilisation et l'importance pour l'utilisateur du flux capturé. Par exemple, une caméra située sur la face arrière du terminal, comme la caméra 103, est associée à une priorité supérieure à celle de la caméra 102, située sur la face avant. En effet, il est possible de déterminer un probable contexte d'utilisation du terminal selon la position d'un dispositif d'acquisition en cours d'utilisation. Par exemple, lorsqu'au cours d'une communication les dispositifs d'acquisition 102 et 105 sont mis en oeuvre, l'image du visage de l'utilisateur et sa voix sont capturé pour être transmis vers un correspondant. En revanche, lorsque les dispositifs d'acquisition 103 et 104 sont mis en oeuvre, c'est que l'utilisateur souhaite délibérément partager un objet particulier. Ainsi, parce qu'il résulte d'un choix délibéré de l'utilisateur, un flux vidéo capturé à partir de la caméra 103 à une importance supérieure à un flux capturé par la caméra 102. De même, on peut considérer que le son capturé par le microphone 105 qui est destiné à capturer les paroles de l'utilisateur est plus important qu'un flux audio capturé par le microphone d'ambiance 104 destiné quant à lui à capturer une ambiance sonore.

A **l'étape 203**, une mesure d'économie de ressources est mise en oeuvre lorsqu'un dispositif particulier est déterminé en cours d'utilisation. Par exemple, lorsque le dispositif d'acquisition vidéo 102 est déterminé en cours d'utilisation, au moins une mesure d'économie de ressources associée au flux capturé par ce dispositif est mise en oeuvre alors qu'à l'inverse, lorsque le dispositif d'acquisition vidéo 103 est déterminé en cours d'utilisation, aucune mesure d'économie de ressources associée au flux vidéo capturé par ce dispositif n'est mise en oeuvre. De même, lorsque le dispositif d'acquisition audio 104 est déterminé en cours d'utilisation, au moins une mesure d'économie de ressources associée au flux capturé par ce dispositif est mise en oeuvre, alors qu'à l'inverse, lorsque le dispositif d'acquisition audio 105 est déterminé en cours d'utilisation, aucune mesure d'économie de ressources associée au flux vidéo capturé par ce dispositif n'est mise en oeuvre. Ainsi, le flux vidéo est privilégié lorsqu'il est issu de la caméra dorsale du terminal et le flux audio est privilégié lorsqu'il provient du microphone destiné à capturer la parole de l'utilisateur. Le procédé permet ainsi de mettre en oeuvre des mesures d'économie de ressources selon le contexte d'utilisation du terminal. En particulier, le procédé permet la préservation d'un flux important pour l'utilisateur et l'application de mesures d'économie de ressources lorsque le flux est moins important pour l'utilisateur.

Ainsi, selon un mode de réalisation de réalisation particulier, le procédé n'applique pas de mesure d'économies de ressources lorsque qu'un flux vidéo est capturé par une caméra qui n'est pas située sur la face avant du terminal et applique au moins une mesure d'économie à un flux vidéo lorsqu'il est issu d'une caméra située sur la face avant du terminal, c'est-à-dire sur la même face que l'écran principal du terminal.

Selon un mode particulier de réalisation, le procédé n'applique pas de mesure d'économies de ressources lorsque qu'un flux audio est capturé par un microphone destiné à capturer les paroles de l'utilisateur, comme par exemple le microphone 105, et applique au moins une mesure d'économie lorsque le flux audio est issu d'un microphone destiné à capturer l'ambiance sonore de l'environnement du terminal, comme par exemple le microphone 104.

Selon un premier exemple, lorsque la caméra 102 est déterminée en cours d'utilisation et qu'une indication selon laquelle une limite de ressource est atteinte, le procédé met en oeuvre une mesure d'économie de ressources associée à ce dispositif. Selon un premier exemple, la mesure d'économie consiste à suspendre la capture par le dispositif identifié en cours d'utilisation. Pour cela, l'arrêt du dispositif de capture peut par exemple être réalisé au moyen d'un appel de procédure via une interface de programmation du système d'exploitation. Une telle mesure peut également être mise en oeuvre lorsque le flux transmis vers le correspondant est un flux composé à partir d'images capturées simultanément à partir de la caméra 102 et de la caméra 103. Par exemple, lorsque le terminal transmet des images de l'environnement capturées via la caméra 103 dans lesquelles sont incrusté des images du visage de l'utilisateur capturées via la caméra 102, la mesure d'économie consiste à stopper la capture et l'incrustation des images du visage de l'utilisateur. L'invention permet ainsi de réduire la complexité des traitements tout en permettant à l'utilisateur de poursuivre le partage de l'objet filmé par la caméra 103.

Selon un autre exemple, la mesure d'économie de ressources consiste à suspendre la capture à partir d'un dispositif déterminé en cours de fonctionnement et à répéter la dernière image capturée. Pour cela, le terminal peut mémoriser dans une mémoire RAM la dernière image capturée et fournir cette image à l'encodeur vidéo à la place des images capturées par la caméra 102. L'encodage d'une image statique permet de réduire considérablement le débit du flux compressé résultant du codage et permet la réalisation d'économie en termes de bande passante réseau. Une telle mesure peut également être mise en oeuvre lorsque le flux transmis vers le correspondant est un flux composé à partir d'images capturées simultanément à partir de la caméra 102 et de la caméra 103. Dans ce cas, la capture des images par le dispositif 103 est poursuivie alors que les images capturées par la caméra 102 sont remplacées par la dernière image capturée.

Selon un mode particulier de réalisation, le procédé est tel que la mesure d'économie de ressources comprend la réduction de la fréquence de capture des images par le premier dispositif.

Selon un mode de réalisation particulier, le procédé est tel que la mesure d'économie d'énergie comprend la réduction de la résolution spatiale des images capturées par le premier dispositif.

La réduction de la fréquence de capture ou de la résolution des images capturées permet une réduction significative de la complexité de codage et permet la réalisation d'économies substantielles en termes de consommation d'énergie et de bande passante. De telles mesures peuvent être mise en oeuvre en modifiant la configuration des dispositifs d'acquisition, par exemple au travers d'interfaces de programmation du système d'exploitation.

Selon une réalisation particulière, lorsqu'un flux audio transmis vers un correspondant résulte d'un mixage du son capturé par le microphone 104 et le microphone 105, une mesure d'économie de ressources consiste à stopper la capture à partir du microphone 104 tout en poursuivant la capture à partir du dispositif 105. La parole de l'utilisateur étant généralement plus importante que l'ambiance sonore du terminal, le procédé permet ainsi de mettre en oeuvre une mesure d'économie adaptée au contexte d'utilisation du terminal.

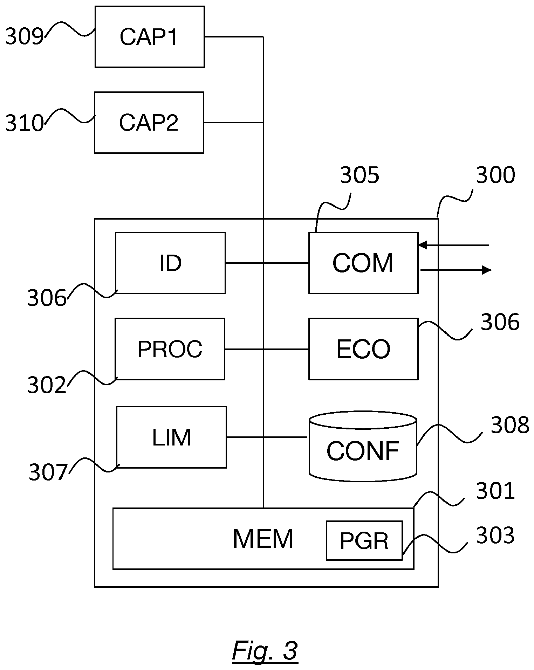

La **figure 3** illustre l'architecture d'un dispositif 300 adapté pour mettre en oeuvre le procédé selon un mode particulier de réalisation.

Le dispositif comprend un espace de stockage 301, par exemple une mémoire MEM, une unité de traitement 302 équipée par exemple d'un processeur PROC. L'unité de traitement peut être pilotée par un programme 303, par exemple un programme d'ordinateur PGR, mettant en oeuvre le procédé de gestion tel que décrit dans l'invention en référence à la figure 3, et notamment les étapes d'obtention d'une indication selon laquelle une limite de ressources est atteinte, d'identification des dispositifs d'acquisition en cours d'utilisation, et de mise en oeuvre d'une mesure d'économie de ressources lorsque le premier dispositif est identifié en cours d'utilisation.

À l'initialisation, les instructions du programme d'ordinateur 303 sont par exemple chargées dans une mémoire RAM (Random Access Memory) avant d'être exécutées par le processeur de l'unité de traitement 302. Le processeur de l'unité de traitement 302 met en oeuvre les étapes du procédé de gestion selon les instructions du programme d'ordinateur 303.

Pour cela, le dispositif comprend, outre la mémoire 301, au moins un premier (309) et un second (310) dispositifs d'acquisition adaptés pour capturer des données d'un même type. Il peut s'agir par exemple d'une première et d'une seconde caméra, la première caméra étant adaptée pour capturer des images de l'utilisateur et la seconde caméra étant adaptée pour capturer des images de l'environnement du terminal. Selon un mode de réalisation particulier, ces dispositifs d'acquisition sont localisés sur des faces différentes du terminal, la première caméra étant positionnée sur la même face que l'écran du terminal et la seconde caméra étant positionnée sur la face opposée. Selon une réalisation particulière, les premier et second dispositifs d'acquisition sont des dispositifs d'acquisition audio, le premier dispositif étant configuré pour capturer un son ambiant de l'environnement du terminal, le second dispositif étant configuré pour capturer la parole de l'utilisateur. Selon encore une autre réalisation particulière, le terminal comprend des premier et second dispositifs de capture vidéo et des premier et second dispositifs de capture audio.

Le dispositif comprend également un module de communication 305 permettant au dispositif d'échanger des données avec d'autres terminaux, et en particulier de transmettre des flux audio et/ou vidéo capturés à partir de dispositifs d'acquisition du terminal. Ce module de communication peut correspondre par exemple à une interface réseau de type Wifi, Bluetooth, GSM, 3G ou Ethernet et permet d'établir des connexions de données et/ou des communications vocales.

Le dispositif comprend aussi un module 307 d'obtention d'une indication selon laquelle une limite de ressources est atteinte. Le module 307 peut être mis en oeuvre par un processeur, par exemple par le processeur PROC de l'unité de traitement 304 et par l'exécution d'instructions de programme d'ordinateur chargé par exemple dans la mémoire 301.Les instructions pour la mise en oeuvre du module 307 peuvent comprendre des instructions configurées pour s'abonner à des notifications émises par le système d'exploitation du terminal et des instructions pour recevoir ces notifications, et en particulier des notifications concernant l'atteinte de seuils de charge résiduelle d'une batterie, de seuils d'occupation mémoire ou de charge CPU (Central Processing Unit). Les instructions pour la mise en oeuvre du module 307 peuvent également comprendre des instructions adaptées pour recevoir et analyser des rapports de transmission de données, comme par exemple des rapports RTCP, afin de déterminer si un seuil d'occupation du réseau de transmission est atteint.

Le dispositif comprend également un module 306 d'identification des dispositifs d'acquisition en cours d'utilisation. Un tel module peut être mis en oeuvre par un processeur, par exemple par le processeur PROC de l'unité de traitement 304 et par l'exécution d'instructions de programme d'ordinateur chargé dans la mémoire 301 et adaptées pour identifier au moins un dispositif d'acquisition, en invoquant par exemple des fonctions d'une interface de programmation du système d'exploitation du dispositif. Pour cela, le dispositif peut obtenir une liste des dispositifs d'acquisition du terminal et pour chaque élément de la liste, invoquer une fonction permettant d'obtenir un statut sur l'activité du dispositif d'acquisition.

Le dispositif comprend en outre, de façon optionnelle, un module 308 de lecture d'une information de configuration comprenant au moins une association entre un dispositif d'acquisition et une priorité. Ce module 308 peut être par exemple un module d'accès à une base de données du terminal ou un module de lecture d'un fichier de configuration, ou , selon une réalisation particulière, à partir d'un serveur distant.

Le dispositif comprend enfin un module de commande 306 configuré pour mettre en oeuvre une mesure d'économie de ressources lorsque le premier dispositif est identifié en cours d'utilisation. Le module 306 peut être mis en oeuvre par un processeur, par exemple par le processeur PROC de l'unité de traitement 304 et par l'exécution d'instructions de programme d'ordinateur chargées dans la mémoire 301 et adaptées pour mettre en oeuvre, lorsqu'au moins un dispositif d'acquisition particulier est déterminé en cours d'utilisation, au moins une mesure d'économie de ressource associée à ce au moins un dispositif d'acquisition particulier. Selon un mode de réalisation particulier, la mesure d'économie de ressources associée a un dispositif d'acquisition est mise en oeuvre lorsque au moins deux dispositifs d'acquisition sont identifiés en cours d'utilisation. Pour cela, les instructions adaptées pour mettre en oeuvre le module 306 peuvent comprendre au moins une instruction adaptée pour suspendre la capture des données à partir du au moins un dispositif d'acquisition déterminé en cours d'acquisition. Selon une réalisation particulière de l'invention, les instructions de mise en oeuvre du module 306 comprennent des instructions visant à mémoriser dans une mémoire, par exemple dans la mémoire 301, la dernière image capturée par un dispositif d'acquisition vidéo déterminé en cours d'utilisation et à fournir régulièrement cette dernière image capturée à un encodeur pour qu'elle soit transmise à un correspondant. Selon une autre réalisation particulière, les instructions de mise en oeuvre du module 306 comprennent des instructions adaptées pour reconfigurer au moins un dispositif d'acquisition vidéo de façon à réduire la résolution spatiale ou la fréquence des images capturées.

Selon une réalisation particulière, le dispositif est intégré dans un terminal de communication de type smartphone, tablette, console de jeux vidéo portable ou encore dans un ordinateur personnel.

## Revendications

1. Procédé de gestion de ressources lors de la capture d'au moins un flux de données sur un terminal, le terminal comprenant au moins un premier dispositif d'acquisition d'un flux de données et un second dispositif d'acquisition alternatif au premier dispositif d'acquisition, les premier et second dispositifs d'acquisition étant adaptés pour capturer (200) un même type de données, le procédé étant **caractérisé en ce qu'**il comprend les étapes suivantes :
- Obtention d'une indication (201) selon laquelle une limite de ressources est atteinte,
- Identification (202) des dispositifs d'acquisition en cours d'utilisation, et
- Mise en oeuvre (203) d'une mesure d'économie de ressources associée au premier dispositif d'acquisition, lorsque le premier dispositif est identifié en cours d'utilisation.

2. Procédé selon la revendication 1 **caractérisé en ce que** la mesure d'économie de ressources associée au premier dispositif d'acquisition est mise en oeuvre lorsque les premier et second dispositifs d'acquisition sont identifiés en cours d'utilisation.

3. Procédé selon l'une quelconque des revendications 1 ou 2 **caractérisé en ce que** la mesure d'économie de ressources comprend la suspension de la capture par le premier dispositif.

4. Procédé selon l'une quelconque des revendications précédentes **caractérisé en ce que** les premier et second dispositifs d'acquisition sont localisés sur des faces différentes du terminal.

5. Procédé selon l'une quelconque des revendications 1 à 4 **caractérisé en ce que** le flux de données est un flux vidéo.

6. Procédé selon la revendication 5 **caractérisé en ce que** la mesure d'économie de ressources comprend la répétition de la dernière image capturée par le premier dispositif.

7. Procédé selon la revendication 5 **caractérisé en ce que** la mesure d'économie de ressources comprend la réduction de la fréquence de capture des images par le premier dispositif.

8. Procédé selon l'une quelconque des revendications 5 à 7 **caractérisé en ce que** la mesure d'économie d'énergie comprend la réduction de la résolution spatiale des images capturées par le premier dispositif.

9. Procédé selon l'une quelconque des revendications 1 à 4 **caractérisé en ce que** le flux de données est un flux audio.

10. Dispositif de gestion de ressources lors de la capture d'au moins un flux de données, le dispositif comprenant au moins un premier dispositif d'acquisition (309) d'un flux de données et un second dispositif d'acquisition (310) alternatif au premier dispositif d'acquisition, les premier et second dispositifs d'acquisition étant adaptés pour capturer un même type de données, le dispositif étant **caractérisé en ce qu'**il comprend :
- Un module (304) pour obtenir une indication selon laquelle une limite de ressource est atteinte,
- Un module d'identification (305) des dispositifs d'acquisition en cours d'utilisation,
- Un module de commande (306) configuré pour mettre en oeuvre une mesure d'économie de ressources associée au premier dispositif d'acquisition, lorsque le premier dispositif est identifié en cours d'utilisation.

11. Dispositif selon la revendication 10 **caractérisé en ce que** les premier et second dispositifs d'acquisition sont localisés sur des faces différentes du dispositif.

12. Terminal de communication **caractérisé en ce qu'**il comporte un dispositif de gestion selon l'une quelconque des revendications 10 à 11.

13. Programme d'ordinateur **caractérisé en ce qu'**il comporte les instructions pour l'exécution du procédé de capture selon l'une quelconque des revendications 1 à 9, lorsqu'elles sont exécutées par un processeur.

14. Support d'informations lisible par un processeur sur lequel est enregistré un programme d'ordinateur comprenant des instructions pour l'exécution des étapes du procédé de capture selon l'une quelconque des revendications 1 à 9.
